# EUROPEAN PATENT APPLICATION

(11) **EP 3 343 471 A1**
(43) Date of publication of application: **04.07.2018**
(21) Application number: 17209118.3
(22) Date of filing: 20.12.2017
(51) Int. Cl.: G06Q 10/00, G06Q 10/06

(54) **MAINTENANCE MANAGEMENT DEVICE, MAINTENANCE MANAGEMENT METHOD, MAINTENANCE MANAGEMENT PROGRAM, AND NON-TRANSITORY COMPUTER READABLE STORAGE MEDIUM**

(30) Priority: 28.12.2016 JP 2016256039
(71) Applicant: Yokogawa Electric Corporation, Tokyo 180-8750 (JP)
(72) Inventor: Yokochi, Yutaka, Tokyo, 180-8750 (JP); Shibamura, Junpei, Tokyo, 180-8750 (JP)
(74) Representative: Henkel, Breuer & Partner

(57) **Abstract**

A maintenance management device includes a vendor information acquirer configured to acquire vendor information of a vendor of a device using identification information for uniquely identifying the device, a user information acquirer configured to acquire a usage condition of the device possessed by a user who uses the device, a recommendation storage that stores a recommendation condition set based on the vendor information and a recommendation content related to maintenance of the device in association with each other, a determiner configured to determine whether the recommendation condition is satisfied or not based on the usage condition, and a recommendation notifier configured to notify of the recommendation content associated with the recommendation condition if the determiner determines that the recommendation condition is satisfied.

## Description

### BACKGROUND

### Technical Fields

The present invention relates to a maintenance management device, a maintenance management method, a maintenance management program, and a non-transitory computer readable storage medium.

Priority is claimed on Japanese Patent Application No. 2016-256039, filed December 28, 2016, the contents of which are incorporated herein by reference.

### Related Art

In plants such as chemical industry plants or the like, a plant that manages and controls a well site of a gas field, an oil field, or the like and the surroundings thereof, a plant that manages and controls hydroelectric power generation, thermal power generation, and nuclear power generation, or the like, a plant that manages and controls environmental power generation such as solar power generation and wind power generation, or the like, a plant that manages and controls water supply and sewerage, a dam, or the like and factories (hereinafter, in a case in which these are collectively referred to, they will be referred to as "plants"), distributed control systems (DCS) have been constructed, and high-level automatic operations have been realized. In a DCS, field devices such as a measuring instrument, an operation device, and the like and a control device controlling these are connected through a communicating means.

In a system or the like of a plant constructed to realize the advanced automatic operation, maintenance of field devices is important for stable operations of a plant. For example, a maintenance operator who maintains field devices which deteriorate with time collects vendor information such as a replacement interval or a calibration interval of a field device and ascertains a usage condition such as the number of days in use or an operation time of a field device installed in a plant to perform a maintenance operation such as replacement and calibration of the field device. The maintenance operator collects the vendor information from a website or the like of a vendor (also referred to as a supplier or a manufacturer) who provides an instruction manual and a field device, for example. Moreover, the maintenance operator acquires the usage condition from a device ledger.

A facility management system which acquires information on field devices added to a plant and automatically manages a device ledger of field devices in the plant is known (for example, see Japanese Unexamined Patent Application Publication No. 2004-029897).

However, the maintenance operator, for example, prints the acquired vendor information on paper, stores it in a file, and refers to it as necessary, or posts the referred content in a device ledger. Therefore, posting the vendor information takes a considerable amount of time and the efficiency of a maintenance operation may decrease.

### SUMMARY

A maintenance management device may include a vendor information acquirer configured to acquire vendor information of a vendor of a device using identification information for uniquely identifying the device, a user information acquirer configured to acquire a usage condition of the device possessed by a user who uses the device, a recommendation storage that stores a recommendation condition set based on the vendor information and a recommendation content related to maintenance of the device in association with each other, a determiner configured to determine whether the recommendation condition is satisfied or not based on the usage condition, and a recommendation notifier configured to notify of the recommendation content associated with the recommendation condition if the determiner determines that the recommendation condition is satisfied.

Further features and aspects of the present disclosure will become apparent from the following detailed description of exemplary embodiments with reference to the attached drawings.

### BRIEF DESCRIPTION OF THE DRAWINGS

FIG. 1 is a block diagram illustrating an example of a software configuration of a maintenance management device according to an embodiment.
FIG. 2 is a diagram illustrating an example of the vendor information (a recommended replacement interval) that the maintenance management device according to the embodiment acquires.
FIGS. 3A and 3B are diagrams illustrating an example of the vendor information (an available time) that the maintenance management device according to the embodiment acquires.
FIG. 4 is a diagram illustrating an example of the vendor information (a recommended calibration interval) that the maintenance management device according to the embodiment acquires.
FIG. 5 is a diagram illustrating an example of the vendor information (identification information) that the maintenance management device according to the embodiment acquires.
FIG. 6 is a diagram illustrating an example of a method of acquiring the user information that the maintenance management device according to the embodiment acquires.
FIG. 7 is a diagram illustrating an example of the user information (a device ledger) that the maintenance management device of the embodiment acquires.
FIG. 8 is a diagram illustrating an example of the user information (inventory information) that the maintenance management device according to the embodiment acquires.
FIGS. 9A to 9D are diagrams illustrating an example of the user information (a usage condition) that the maintenance management device according to the embodiment acquires.
FIG. 10 is a diagram illustrating an example of recommendation information to which the maintenance management device according to the embodiment refers.
FIGS. 11A and 11B are diagrams illustrating an example of recommendation display of which the maintenance management device according to the embodiment notifies.
FIG. 12 is a block diagram illustrating an example of a hardware configuration of the maintenance management device according to the embodiment.
FIG. 13 is a block diagram illustrating an example of a configuration of a maintenance management system according to an embodiment.
FIG. 14 is a block diagram illustrating another example of a configuration of the maintenance management system according to the embodiment.
FIGS. 15A and 15B are diagrams illustrating an example of a merging table including merging information created by merging vendor information and user information that the maintenance management device according to the embodiment generates.
FIG. 16 is a diagram illustrating an example of a maintenance plan that the maintenance management device according to the embodiment creates.

### DETAILED DESCRIPTION OF THE EMBODIMENTS

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

An aspect of the present invention is to provide a maintenance management device, a maintenance management method, a maintenance management program, and a non-transitory computer readable storage medium capable of improving efficiency of maintenance operations.

Hereinafter, a maintenance management device, a maintenance management method, a maintenance management program, and a non-transitory computer readable storage medium according to an embodiment of the present invention will be described in detail with reference to the drawings.

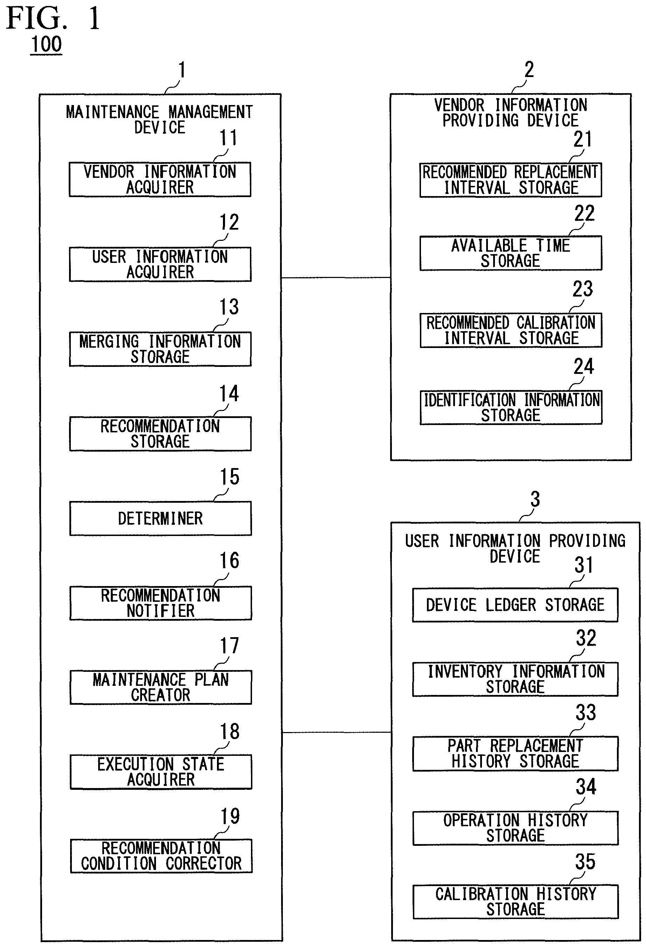

First, a software configuration of a maintenance management device 1 will be described using FIG. 1. FIG. 1 is a block diagram illustrating an example of a software configuration of a maintenance management device according to an embodiment.

In FIG. 1, a maintenance management system 100 includes a maintenance management device 1, a vendor information providing device 2, and a user information providing device 3. The maintenance management device 1 is communicably connected to the vendor information providing device 2 and the user information providing device 3 by cables or wirelessly.

The maintenance management device 1 has respective functions of a vendor information acquirer 11, a user information acquirer 12, a merging information storage 13, a recommendation storage 14, a determiner 15, a recommendation notifier 16, a maintenance plan creator 17, an execution state acquirer 18, and a recommendation condition corrector 19. The vendor information providing device 2 has respective functions of a recommended replacement interval storage 21, an available time storage 22, a recommended calibration interval storage 23, and an identification information storage 24. Moreover, the user information providing device 3 has respective functions of a device ledger storage 31, an inventory information storage 32, a part replacement history storage 33, an operation history storage 34, and a calibration history storage 35.

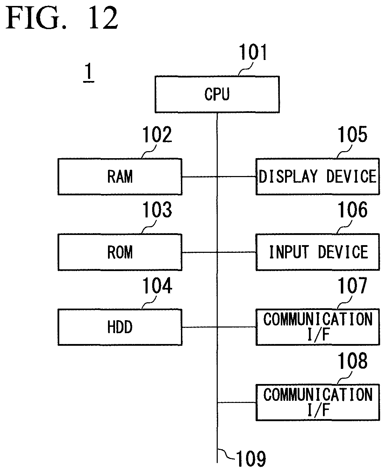

The respective functions of the maintenance management device 1 are functional modules realized by a maintenance management program for controlling the maintenance management device 1. The maintenance management program is provided from a server that provides a program or is provided from a recording medium, for example. The provided maintenance management program is stored in a RAM or the like and is executed by a CPU in a hardware configuration to be described later using FIG. 12.

The respective functions of the vendor information providing device 2 or the user information providing device 3 are functional modules realized by a vendor information providing program or a user information providing program for controlling the vendor information providing device 2 or the user information providing device 3. The vendor information providing program or the user information providing program is executed in a hardware configuration similar to that of the maintenance management device 1. At least one of the functions of the vendor information providing device 2 or the user information providing device 3 may be executed as a function of the maintenance management device 1, for example.

### <Maintenance management device 1>

The vendor information acquirer 11 acquires vendor information of a vendor of a field device from the vendor information providing device 2 using identification information for uniquely identifying the field device. The field device is a sensor, an actuator, or the like which is provided in a plant and has a communication function of performing communication via a cable or wireless network. The sensor measures physical quantity data such as a pressure, temperature, pH, and flow rate of a product in processes of a plant, for example. The actuator is a valve, a pump, and the like. Parts such as sensor elements used in the field device deteriorate with time are known. A field device having parts which deteriorate with time undergoes a replacement maintenance operation at predetermined replacement intervals. The replacement maintenance operation is performed such that parts are replaced for a field device of which the parts alone can be replaced and an entire field device (a main body thereof) is replaced for a field device of which the parts cannot be replaced. In the following description, replacement of a field device may include a case in which parts are replaced. The vendor information acquirer 11 acquires information necessary for replacement of a field device from the vendor information of the vendor of the field device. The details of the vendor information that the vendor information acquirer 11 acquires will be described later.

The vendor information acquirer 11 acquires the vendor information using identification information for uniquely identifying field devices. The identification information for uniquely identifying field devices is a serial No. (an identifier) assigned to each of field devices, for example. The identifier may include redundant information indicating that the identifier is proper information, for example. The vendor information acquirer 11 transmits the identifier to the vendor information providing device 2 as extensible markup language (XML) data, for example, and acquires vendor information corresponding to the transmitted identifier from the vendor information providing device 2. The vendor information acquirer 11 acquires the vendor information when there is an acquisition instruction from a user, for example. The vendor information acquirer 11 may acquire the vendor information periodically.

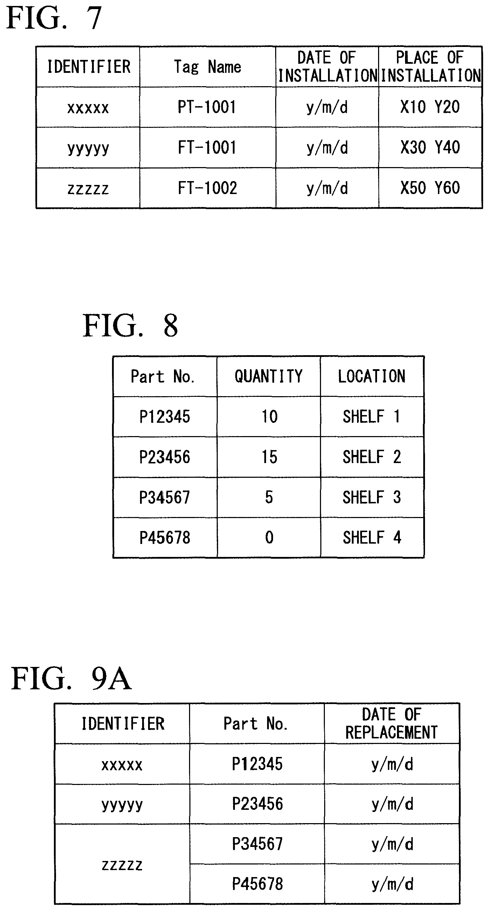

The user information acquirer 12 acquires a usage condition of a field device possessed by a user who uses the field device from the user information providing device 3. The user who uses the field device is a user who can provide a usage condition of a field device and may be a user who operates a plant or the like in which the field device is installed and may be a user who maintains the field device, for example. The usage condition of the field device is a part replacement history of a field device, an operation history of a field device, a calibration history of a field device, and the like, for example. The usage condition of the field device is a portion of the user information. The user information may include a device ledger of the field device managed by the user and inventory information of the field device, for example. The user information acquirer 12 may acquire the user information when there is an acquisition instruction from the user. The user information acquirer 12 may acquire the user information periodically. The details of the user information including the usage condition that the vendor information acquirer 11 acquires will be described later with reference to FIG. 7 and the like.

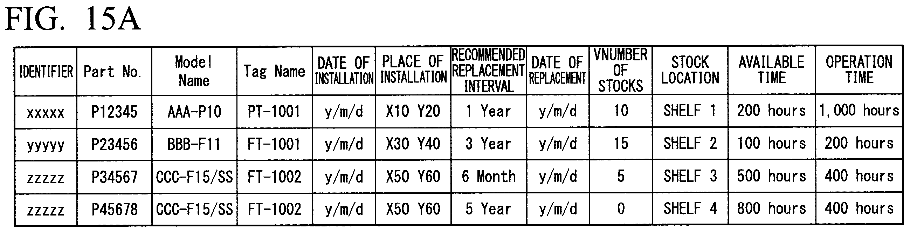

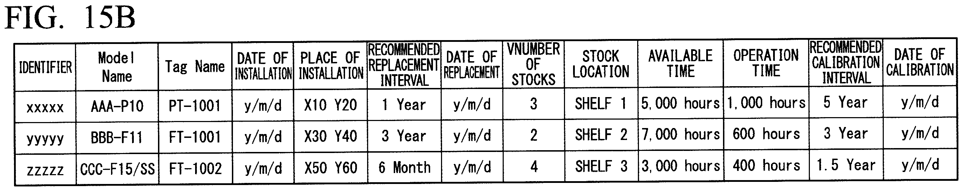

The merging information storage 13 stores merging information created by merging the vendor information acquired from the vendor information providing device 2 and the usage condition acquired from the user information providing device 3 in a table. Table merging is a process of merging a plurality of items of information expressed by table (tabular) data and is a process of merging items of information in a plurality of tables retrieved using a predetermined search key into one item of information. The search key is a data item common to a plurality of tables, and in the present embodiment, a case in which the identifier is used as the search key will be described. That is, the merging information storage 13 stores merging information created by merging the vendor information and the user information in a table using the identifier as the search key. The table merging process is executed by the merging information storage 13. The merging information storage 13 stores a new table (a merging table) generated by gathering the merged vendor information. An example of the newly generated merging table will be described with reference to FIGS. 15A and 15B.

The search key can be determined by a table to be merged, and for example, the model of the field device may be used as the search key. The model of the field device is information that specifies a specification of the field device. It is assumed that field devices of the same model have the same recommended replacement interval, the same available time, or the same recommended calibration interval. The merging information storage 13 may store merging information created by merging items of vendor information or merging information created by merging items of user information, for example. The table merging process may be executed by the vendor information acquirer 11 or the user information acquirer 12. The merging information storage 13 may store merging information (link information) of the vendor information only. That is, table merging may refer to logically merging (linking) a plurality of items of table data.

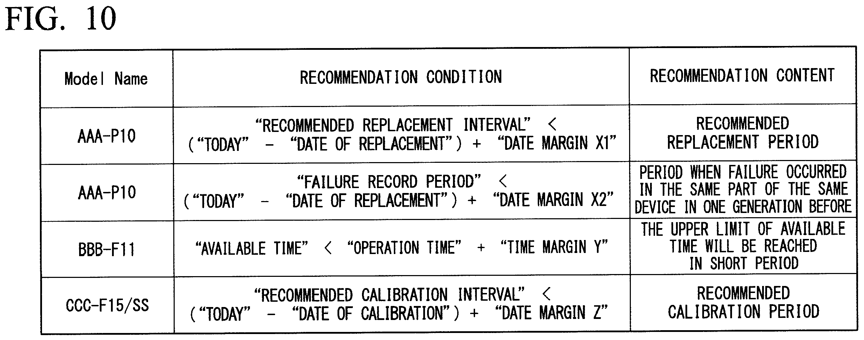

The recommendation storage 14 stores a recommendation condition set based on the vendor information acquired from the vendor information providing device 2 and recommendation content related to maintenance of a device in association with each other. The recommendation condition is a condition for notifying a user of the recommendation content. For example, when the vendor information acquired from the vendor information providing device 2 is a recommended replacement interval of a field device, the recommendation condition is a time condition for notifying the user of replacement of a field device and is calculated by the number of days that have elapsed from the date when the field device was replaced previously. The recommendation content is information of which the user is notified when the recommendation condition is satisfied. For example, when the vendor information acquired from the vendor information providing device 2 is a recommended replacement interval of a field device, the recommendation content is character information for recommending replacement of a field device. The details of the recommendation condition and the recommendation content will be described with reference to FIG. 10.

The determiner 15 determines whether the recommendation condition stored in the recommendation storage 14 is satisfied based on the usage condition acquired by the user information acquirer 12. The determiner 15 determines whether a time condition for notifying a user of replacement of a field device is satisfied by comparing the time condition with a present time acquired from a real-time clock (RTC) which is not illustrated, for example. The determiner 15 periodically determines whether the recommendation condition is satisfied when an event such as an alarm occurs or when there is an instruction from a user, for example.

When the determiner 15 determines that the recommendation condition is satisfied, the recommendation notifier 16 notifies of the recommendation content stored in the recommendation storage 14 in association with the recommendation condition. The notification of the recommendation content to the user of the maintenance device 1 such as a maintenance operator is executed, for example, by displaying text information for recommending replacement of the field device on a display device (not illustrated). The notification of the recommendation content may be executed by outputting sound corresponding to the recommendation content, sending an email including the recommendation content, or turning on a lamp indicating the recommendation content. The recommendation notifier 16 may notify of the recommendation content a number of times.

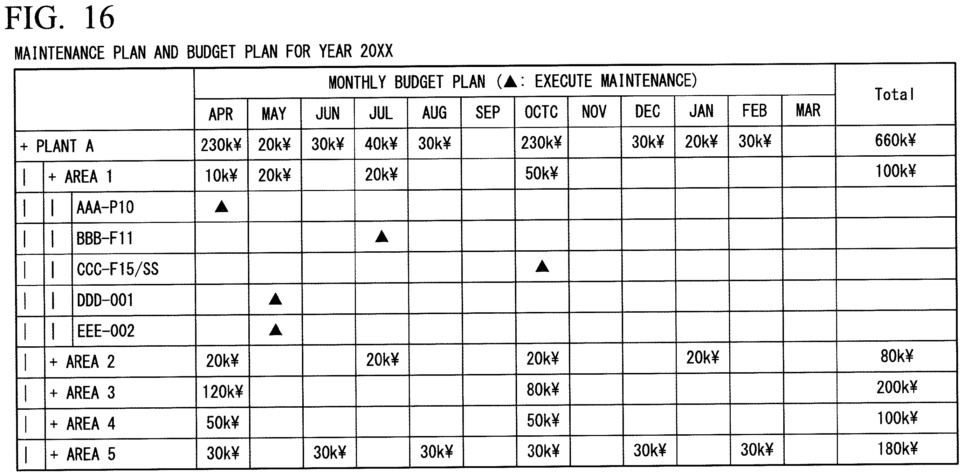

The maintenance plan creator 17 creates a maintenance plan of field devices. The maintenance plan is a replacement plan, a calibration plan, and a purchase plan of field devices, or a budget plan based on these plans. The maintenance plan creator 17 ascertains the usage condition of a field device installed in a plant from information such as a device ledger, a part replacement history, an operation history, or a calibration history of the field device acquired from the user information providing device 3 as the user information and creates a maintenance plan which predicts when and how often a maintenance operation of the field device occurs from the vendor information such as a recommended replacement interval, an available time, or a recommended calibration interval acquired from the vendor information providing device 2 and which predicts the cost associated with purchasing of the field device and the maintenance operation. A maintenance operator who manages the maintenance operation can create a maintenance plan efficiently by referring to the maintenance plan created by the maintenance plan creator 17. The maintenance plan creator 17 may display the created maintenance plan on a display device (not illustrated) and may output the same data as tabular file data. The maintenance plan created by the maintenance plan creator 17 will be described with reference to FIG. 16.

The execution state acquirer 18 acquires an execution state of the recommendation content notified by the recommendation notifier 16. The execution state of the recommendation content is an execution state of the recommendation content for a user who is notified of the recommendation content. For example, the execution state is information indicating whether the recommendation content is executed, when the recommendation content was executed, or what was executed instead of the recommendation content when the recommendation content was not executed. Since the recommendation condition is determined according to a replacement interval of the field device recommended based on the vendor information as described above, for example, an actual replacement operation may be performed always at longer intervals than the recommended replacement interval depending on a user. In this case, the notification of the recommendation content which recommends replacement may be a nuisance to a user. On the other hand, depending on a user, an early notification of the recommendation content may be preferable in order to create a plant maintenance plan. Even if the recommendation content notifies of replacement of parts of which the recommended replacement intervals have elapsed only in a field device having a plurality of replacement parts, when it is difficult to stop the plant, all parts may be replaced at once. The execution state acquirer 18 can ascertain the state of difference between the recommendation content and an actual maintenance operation by acquiring different execution states of users.

The recommendation content may be a notification of a maintenance plan in a predetermined period, for example, as well as a notification of an individual maintenance operation as described above. In such a case, the execution state acquirer 18 may acquire an execution state of an entire maintenance plan rather than acquiring an execution state of individual recommendation content.

The execution state acquirer 18 acquires the execution state by detecting an operation on an operating unit in a user interface (UI) that displays the operating unit that inputs the execution state on a display screen on which the recommendation content is displayed, for example. The operating unit is a button which is pressed when a maintenance operation corresponding to the recommendation content is performed, for example. The execution state acquirer 18 may acquire the execution state by detecting an operation on the operating unit of selecting operation content among a plurality of options. Moreover, the execution state acquirer 18 may acquire the execution state by acquiring the usage condition such as a part replacement history from the user information providing device 3. The execution state acquirer 18 acquires the execution state when an execution state of the recommendation content is input.

The recommendation condition corrector 19 corrects the recommendation condition based on the execution state acquired by the execution state acquirer 18. As described above, since the execution state of the recommendation content is different depending on a user, the recommendation content may be different from an actual maintenance operation. The recommendation condition corrector 19 corrects the recommendation condition in order to correct the difference between the recommendation content and the actual maintenance operation. The recommendation condition and the recommendation content are recorded in association with each other. Correction of the recommendation condition involves adding, removing, or changing the pair of the recommendation condition and the recommendation content. For example, when the recommendation condition is not changed and the recommendation content is changed, correction of the recommendation condition results in adding a new recommendation condition and new recommendation content.

### <Vendor information providing device 2>

The vendor information providing device 2 provides vendor information to the maintenance management device 1. The vendor information is information that can be acquired from a vendor that provides a field device, and for example, is a recommended replacement interval of the field device, an available time of the field device, a recommended calibration interval of the field device, identification information, or the like of the field device.

The recommended replacement interval storage 21 stores a recommended replacement interval of a field device. The recommended replacement interval of the field device is an interval at which it is recommended that parts (consumed parts) used in the field device be replaced. A deterioration speed of parts in a field device is different depending on a use environment (an environment such as a temperature or humidity of a place of installation, a use load, or the like). The recommended replacement interval is an interval at which it is recommended that parts be replaced and is assumed from a deterioration speed in a use environment assumed by a vendor and provided from a vendor for each model and each part of the field device.

The available time storage 22 stores an available time of the field device. The available time of the field device is an available time of a field device or an available time of parts being used in the field device. The available time is an accumulated operation time of the field device and a time in which the field device is not operating is not accumulated. The available time is a time assumed from a deterioration speed in a use environment assumed by a vendor and is provided from a vendor for each model and each part of the field device.

The recommended calibration interval storage 23 stores a recommended calibration interval of a field device. The calibration replacement interval of a field device is an interval at which it is recommended that a field device be calibrated. The field device requires periodic calibration since the zero-point or the like shifts depending on a use environment. The recommended calibration interval is an interval at which calibration is recommended and is assumed from a used environment assumed by a vendor or a statutory interval and provided from a vendor for each model or each part of the field device.

The identification information storage 24 stores identification information of a field device and provides the identification information of the field device to a user. Examples of the identification information of the field device include information on an identifier such as a serial No. capable of uniquely identifying a field device and information on a model (a model name) of the field device corresponding to the identifier. The identification information of the field device includes information such as the date of manufacture on which the field device corresponding to the identifier was manufactured and the date of shipping (the date of the user's purchase) on which the field device corresponding to the identifier was shipped. The vendor information such as a recommended replacement interval of the field device is different for respective models of field devices, and the user acquires the vendor information from the model of the field device. Since the replacement period or the like of a field device is different depending on the date of manufacture or the date of shipping (hereinafter, the dates will be referred to as "date of manufacture or the like"), the user of the field device needs to manage the replacement periods or the like of the respective field devices using a device ledger or the like. The identification information storage 24 can alleviate the user's burden of management of the device ledger by storing the date of manufacturing or the date of shipping as the identification information of the field device and providing the same to the user.

The identification information storage 24 can specify a unique field device using an identifier that uniquely identifies the field device as a search key and provide the information on a model and the date of manufacture or the like of the specified field device as the vendor information, for example. The search key may contain a check key (redundant information) which cannot be known unless a user has the field device on his or her hands. In this way, it is possible to prevent unauthorized acquisition of the vendor information.

### <User information providing device 3>

The user information providing device 3 provides user information to the maintenance management device 1. The user information is information that can be acquired from a user who uses the field device, and for example, is a device ledger of the field device, an inventory ledger of the field device, a part replacement history of the field device, an operation history of the field device, or a calibration history of the field device. Among the items of the user information, the part replacement history of the field device, the operation history of the field device, or the calibration history of the field device is sometimes referred to as a "usage condition" of the field device.

The device ledger storage 31 stores a device ledger of the field device. The device ledger of the field device is recorded information on field devices managed by a user. For example, the device ledger of the field device includes information such as an identifier for uniquely identifying the field device, a tag name assigned to the field device installed in a plant, the date of installation on which the field device was installed in the plant, and the place of installation where the field device is installed in the plant. Information on a field device is added to the device ledger when the maintenance operator installs the field device in the plant, and the information on the field device is removed from the device ledger when the field device is detached from the plant.

The inventory information storage 32 stores inventory information on inventory (spare parts) of the field device. The inventory information of the field device is inventory information of the field device body or inventory information of parts used in the field device. In a plant, an appropriate number of spare parts are stored in stock in preparation for a periodic maintenance operation, an unexpected failure, or the like. The inventory information of the field device is information on storage and retrieval in a warehouse, for example. The inventory information of the field device includes information on a model of the field device, the number of part in stock, and a storage location, for example. The inventory information may include information on a field device which is presently on order.

The part replacement history storage 33 stores a part replacement history of a field device. The part replacement history of the field device includes information such as an identifier for uniquely identifying a field device, a part number, and the date of replacement indicating the date on which a part is replaced, for example.

The operation history storage 34 stores an operation history of a field device. The operation history of the field device includes information such as an identifier for uniquely identifying a field device, a part number, or an operation time of the field device, for example. The operation time is information with which it is possible to calculate a cumulative operation time after a field device of which the available time is determined or a part thereof is replaced. The operation history of the field device may be reset when the device or the part is replaced.

The calibration history storage 35 stores a calibration history of a field device. The calibration history of the field device includes information such as an identifier for uniquely identifying a field device and the date on which the field device was calibrated, for example. The calibration history of the field device may be reset when calibration is performed.

A case in which the respective functions of the vendor information acquirer 11, the user information acquirer 12, the merging information storage 13, the recommendation storage 14, the determiner 15, the recommendation notifier 16, the maintenance plan creator 17, the execution state acquirer 18, and the recommendation condition corrector 19 of the maintenance management device 1 illustrated in FIG. 1 are realized by software has been described. However, at least one of the respective functions may be realized by hardware. Each of the respective functions may be divided into a plurality of functions and executed. Moreover, two or more of the respective functions may be integrated into one function and executed. Furthermore, at least one of the respective functions of the recommended replacement interval storage 21, the available time storage 22, the recommended calibration interval storage 23, and the identification information storage 24 of the vendor information providing device 2 or at least one of the respective functions of the device ledger storage 31, the inventory information storage 32, the part replacement history storage 33, the operation history storage 34, and the calibration history storage 35 of the user information providing device 3 may be realized by hardware. FIG. 1 illustrates a maintenance management system having three devices of the maintenance management device 1, the vendor information providing device 2, and the user information providing device 3. However, one or a plurality of functions of the maintenance management device 1, the vendor information providing device 2, or the user information providing device 3 may be realized in other devices. That is, the maintenance management system illustrated in FIG. 1 is one type of the maintenance management device according to the present embodiment, and the configuration of the maintenance management device 1 is not limited to the configuration of the vendor information providing device 2 or the user information providing device 3.

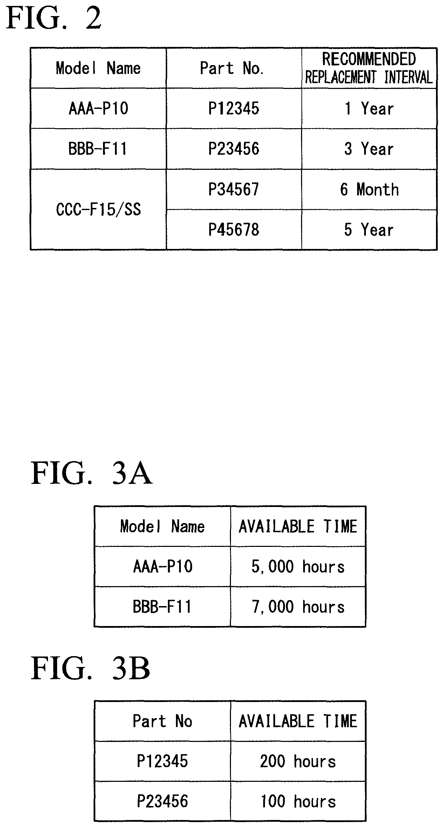

Next, the vendor information that the vendor information acquirer 11 acquires from the vendor information providing device 2 will be described with reference to FIGS. 2 to 5. The vendor information acquirer 11 can acquire the vendor information using the identification information for identifying a field device. The vendor information described in FIGS. 2 to 5 is the same information as the information described in an instruction manual which is synchronized with the field device or can be downloaded from a website of a vendor, for example. The vendor information acquirer 11 can eliminate the labor of user examining vendor information for each field device or each part from the instruction manual or the like by acquiring the vendor information.

FIG. 2 is a diagram illustrating an example of "recommended replacement interval" of the vendor information that the maintenance management device 1 according to the embodiment acquires. The recommended replacement interval is stored in the recommended replacement interval storage 21 of the vendor information providing device 2.

In FIG. 2, the recommended replacement interval has data items of "Model Name", "Part No.", and "Recommended Replacement Interval". The data item of "Model Name" indicates the model of the field device. The data item of "Part No." is a part number of the field device. Moreover, "Recommended Replacement Interval" indicates a recommended replacement interval. That is, the recommended replacement interval illustrated in FIG. 2 includes information on parts used in field devices of respective models and information on a recommended replacement interval of the part. That is, when the vendor information acquirer 11 searches the recommended replacement interval using the model of a field device as a search key, it is possible to acquire information on a part number of a part used in the field device and the recommended replacement interval. When the part number is used as the search key, the vendor information acquirer 11 can acquire information on the model of the field device in which the part is used and the recommended replacement interval.

For example, a field device of which "Model Name" is "CCC-F15/SS" uses a part of which "Part No." is "P34567" and a part of which "Part No." is "P45678" and the "Recommended Replacement Intervals" of the parts are "6 Months" and "5 Years", respectively. Since the recommended replacement interval is a period in a predetermined use environment assumed by a vendor, trouble such as malfunction or deterioration may not always occur even if the parts are used in excess of the recommended replacement interval in an actual use environment. While FIG. 2 illustrates a case in which one recommended replacement interval is described for one part, the recommended replacement interval may be set according to a use temperature (50°C, 70°C, 100°C, and the like), for example.

FIGS. 3A and 3B are diagrams illustrating an example of "Available time" of the vendor information that the maintenance management device 1 according to the embodiment acquires. FIG. 3A illustrates the available time of a field device body and FIG. 3B illustrates an available time of a part used in a field device. The available time is stored in the available time storage 22 of the vendor information providing device 2.

In FIG. 3A, the available time has data items of "Model Name" and "Available time". In FIG. 3B, the available time has data items of "Part No." and "Available time". The data items of "Part No." and "Model Name" are the same as the data items described in FIG. 2, and the description thereof will be omitted. In the following description, description of the same data items may sometimes be omitted.

The "Available time" is an accumulated operation time for which the field device can be used. For example, since deterioration due to wearing does not occur when a device is not operating, the difference between an actual deterioration interval and a replacement interval decreases when a part replacement interval is determined based on the available time rather than a recommended replacement interval. For example, in FIG. 3A, the "Available time" of a field device of which the "Model Name" is "AAA-P10" is "5,000 hours". Moreover, in FIG. 3B, the "Available time" of a part of which the "Part No." is "P12345" and which is used in the field device of "AAA-P10" is "200 hours", which is shorter than the available time of the field device body. That is, the field device of "AAA-P10" needs to be replaced when the part has been replaced 25 times. Moreover, since the recommended replacement interval is a period in a predetermined use environment assumed by a vendor, trouble such as malfunction or deterioration may not always occur even if the parts are used in excess of the available time in an actual use. While FIGS. 3A and 3B illustrate a case in which one available time is described for one part, the available time may be set according to a use load (20%, 50%, 100%, and the like), for example.

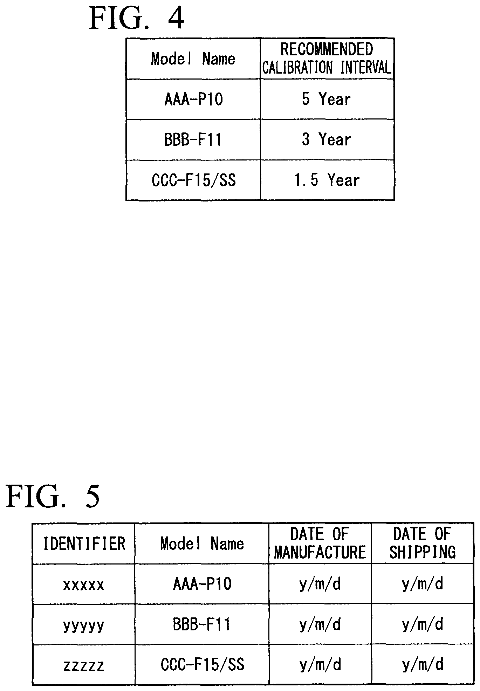

FIG. 4 is a diagram illustrating an example of "Recommended Calibration Interval" of the vendor information that the maintenance management device 1 according to the embodiment acquires. The recommended calibration interval is stored in the recommended calibration interval storage 23 of the vendor information providing device 2.

In FIG. 4, the recommended calibration interval has data items of "Model Name", "Part No.", and "Recommended Calibration Interval". The "Recommended Calibration Interval" indicates a recommended calibration interval. Calibration is input/output calibration such as zero-point adjustment, for example. When the vendor information acquirer 11 searches the recommended calibration interval using the model of a field device as a search key, it is possible to acquire information on the recommended calibration interval of the field device.

For example, the "Recommended Calibration Interval" of a field device of which the "Model Name" is "AAA-P10" is "5 Years". The recommended calibration interval is a period in a predetermined use environment assumed by a vendor, a statutory interval, or the like.

The recommended replacement interval, the available time, and the recommended calibration interval described with reference to FIGS. 2 to 4 can be acquired using the model (or the part number) of a field device as a search key. Therefore, the vendor information acquirer 11 can easily acquire the vendor information using the model of a field device as a search key, and the user of the maintenance management device 1 can perform maintenance operations efficiently with no need to refer to an instruction manual.

FIG. 5 is a diagram illustrating an example of "identification information" of the vendor information that the maintenance management device 1 according to the embodiment acquires. The identification information is stored in the identification information storage 24 of the vendor information providing device 2.

In FIG. 5, the identification information has data items of "Identifier", "Model Name", "Date of Manufacture", and "Date of Shipping". The data item of "Identifier" is information for uniquely identifying (specifying) a field device and is a serial No., for example. The "Date of Manufacture" is the date on which a field device identified by the identifier was manufactured. The "Date of Shipping" is the date on which a field device identified by the identifier was shipped. The "Date of Shipping" may be the date on which the field device was purchased by a user. When the vendor information acquirer 11 searches the identification information using the identifier of a field device as a search key, it is possible to acquire information such as "Model Name", "Date of Manufacture", and "Date of Shipping" of the field device. If the information of "Model Name" is known, it is possible to acquire information on the recommended replacement interval, the available time, and the recommended calibration interval described in FIGS. 2 to 4 as the vendor information using the "Model Name" as a search key. A user who has purchased field devices needs to manage information such as the dates of manufacture or the like which are different for respective field devices of the same model in order to perform management (maintenance management) of maintenance operations of a replacement period or a calibration period of field devices. In the present embodiment, the maintenance management device 1 can easily acquire information on "Date of Manufacture", "Date of Shipping", "Recommended Replacement Interval", "Available time", and "Recommended Calibration Interval" by searching the vendor information using the identifier of a field device as a search key. Therefore, the user of field devices can perform maintenance management efficiently with no need to write these items of information of individual field devices on a device ledger or the like.

Although FIG. 5 illustrates a case in which "Date of Manufacture" and "Date of Shipping" are provided as the data items, information on any one of "Date of Manufacture" and "Date of Shipping" may be provided. For example, for a field device in which a part which deteriorates with time (the part is put into a state in which it deteriorates with time) is installed at the time of shipping, only the date of shipping of the field device may be provided as the vendor information. Moreover, for a field device in which a part which deteriorates with time is installed on the date of manufacture, only the date of manufacture may be provided as the vendor information. That is, the vendor information that the maintenance management device 1 acquires may provide information of each field device necessary for maintenance of the field device using an identifier as a search key.

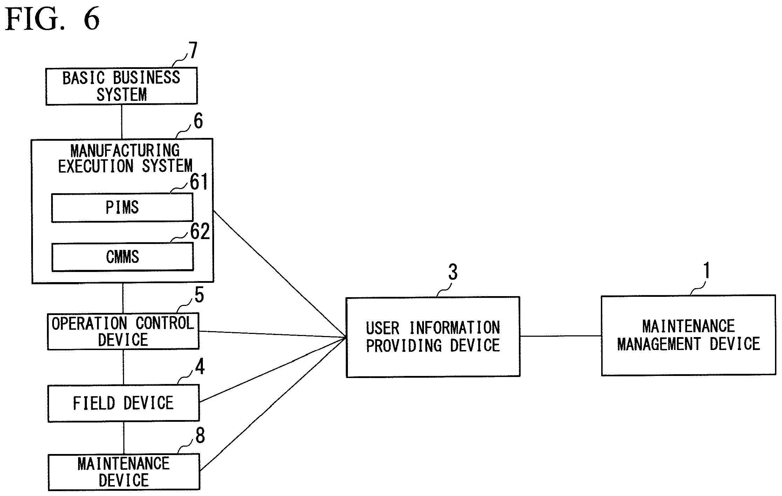

Next, a method of acquiring the user information will be described with reference to FIG. 6. FIG. 6 is a diagram illustrating a method of acquiring the user information that the maintenance management device 1 according to the embodiment acquires.

In FIG. 6, the maintenance management device 1 acquires user information from the user information providing device 3. A field device 4, an operation control device 5, a manufacturing execution system 6, and a basic business system 7 form a control system of a plant. The field device 4, the operation control device 5, the manufacturing execution system 6, and the basic business system 7 are connected by cables or wirelessly. A maintenance device 8 may be connected to the field device 4 by a maintenance operator. The user information providing device 3 acquires user information to be provided to the maintenance management device 1 from one or two or more devices of the field device 4, the operation control device 5, the manufacturing execution system 6, and the maintenance device 8.

The field device 4 is a sensor, an actuator, or the like which is provided in a plant and has a communication function of performing communication with the operation control device 5 via a cable or wireless network. The field device 4 can perform communication corresponding to standards of communication dedicated for industrial meters (sometimes referred to as "field communication") such as ISA100 which is a wireless communication standard of the International Society of Automation (ISA), highway addressable remote transducer (HART: registered trademark), BRAIN (registered trademark), FOUNDATION Fieldbus, and PROFIBUS. Although FIG. 6 illustrates a case in which one field device 4 is installed, a number of field devices 4 are installed in a plant. The field device 4 can provide information on parameters such as process data of the field device 4 to the user information providing device 3 via field communication as the user information.

The operation control device 5 controls pumps, valves, heaters, and the like (which are not illustrated) based on the process data acquired from the field device 4 to control processes in the plant. The operation control device 5 is a controller such as a programmable logic controller (PLC), for example. The operation control device 5 performs an arithmetic operation using the parameter information acquired from the field device 4 via field communication to control processes. The operation control device 5 may provide information to be used for process control to the user information providing device 3 as the user information.

The manufacturing execution system 6 is a manufacturing execution system (MES) positioned between the basic business system 7 and the operation control device 5, for example, and monitors or manages the information on the field device 4 acquired by the operation control device 5. The manufacturing execution system 6 is a server device or a general-purpose computer such as a desktop PC, for example. The manufacturing execution system 6 may have the functions of a plant information management system (PIMS) 61 or a computerized maintenance management system (CMMS) 62.

The PIMS 61 functions as a plant information management system that collects and records plant state information. In FIG. 6, the PIMS 61 collects and records the information on the field device 4 via the operation control device 5 (or directly without via the operation control device 5). The PIMS 61 collects time-series information of the field device 4 and records the collected information as history data (historian). The history data includes information on the field device 4 and the date and time when the information was measured. The PIMS 61 may provide the history data to the user information providing device 3 as the user information. The PIMS 61 may provide data recorded in a device ledger to be described later with reference to FIG. 7 to the user information providing device 3, for example.

The CMMS 62 functions as a plant maintenance management system that records a maintenance history of field devices or the like in a plant and manages a maintenance plan. The CMMS 62 acquires an operation history of maintenance operations on the field device 4 performed and recorded by the maintenance device 8 from a plurality of maintenance devices 8 and records the operation history as maintenance information, for example. Moreover, the CMMS 62 may allow a maintenance operation performed by a maintenance operator to be manually input and record the maintenance operation as maintenance information. Furthermore, the CMMS 62 acquires inventory information of spare parts of field devices from the basic business system 7 and provide the inventory information to be described later with reference to FIG. 8 to the user information providing device 3 as user information.

The basic business system 7 is an enterprise resource planning (ERP) system for process manufacturing industry for managing business resources such as accounting, production management, sales management, and inventory management, for example. The basic business system 7 may uses information on an operating state of a plant as management information of business resources. Moreover, the basic business system 7 may include a maintenance management system that manages information on operations related to maintenance and repairing of a plant. The basic business system 7 is a server device or a general-purpose computer such as a desktop PC, for example.

The maintenance device 8 is a device that performs a maintenance operation of the field device 4. The maintenance device 8 is a handheld terminal that performs maintenance items such as periodic inspection of the field device 4, changing of setting information (parameters) set to the field device 4, zero-point adjustment, a loop test, and the like, for example. The maintenance device 8 may be a device that automatically records the results of maintenance operations. The maintenance device 8 may provide the maintenance operation results to the user information providing device 3.

As described above, the user information providing device 3 can acquire the user information to be provided to the maintenance management device 1 from the field device 4, the operation control device 5, the manufacturing execution system 6, or the maintenance device 8. The user information providing device 3 provides the acquired information to the maintenance management device 1.

Next, the user information that the user information acquirer 12 acquires from the user information providing device 3 will be described with reference to FIG. 7, FIG.8, and FIGS. 9A to 9D. The user information described in FIG. 7, FIG.8, and FIGS. 9A to 9D is information that the user uses as maintenance information, and the user information can be acquired from respective controllers of a plant as described with reference to FIG 6.

FIG. 7 is a diagram illustrating an example of a "device ledger" of the user information that the maintenance management device according to the embodiment acquires. The device ledger is stored in the device ledger storage 31 of the user information providing device 3.

In FIG. 7, the device ledger has data items of "Identifier", "Tag Name", "Date of Installation", and "Place of Installation". The data item of "Tag Name" indicates a tag name of the field device. An identifier is information for uniquely specifying a field device whereas the tag name is identification information (ID) for identifying the use of the field device 4. The individual tag names may be set for respective field devices 4 as parameters. Therefore, the same tag name may be set to a field device before replacement and a field device after replacement so that users can understand the field devices are of the same use in a plant. For example, "xxxxx" in "Identifier" is information for uniquely specifying a field device, and "PT-1001" is information indicating specific use in a plant. Identifier information is used as the search key of the vendor information as described above, and a tag name unique to a plant is not used as the search key.

The data item of "Date of Installation" indicates the date on which the field device 4 was installed in a plant. The date of installation has the same meaning as the date of replacement when the field device was replaced. The data item of "Place of Installation" indicates the place of installation where the field device is installed in the plant. The place of installation can be expressed as the coordinates on a plane (xy) in the plant, for example. A maintenance operator can find a maintenance target field device from the plant using the place of installation and the tag name. Character information like "XX unit of OO device" may be input to the data item of "Place of Installation".

Information on a field device is added to the device ledger when the maintenance operator installs the field device in the plant, and the information on the field device is removed from the device ledger when the field device is detached from the plant. That is, the field device recorded in the device ledger is a field device which is presently installed in a plant, and a maintenance target can be specified by acquiring the user information from the device ledger.

FIG. 8 is a diagram illustrating an example of "inventory information" of the user information that the maintenance management device according to the embodiment acquires. The inventory information is stored in the inventory information storage 312 of the user information providing device 3.

In FIG. 8, the inventory information has data items of "Part No.", "Quantity", and "Location". The data item of "Quantity" is the number of parts in stock of a field device. The data item of "Location" is the location (storage location) of a stock item.

By acquiring information on the number of parts in stock as the user information, it is possible to make a use plan for parts in stock as well as information on a replacement period. It is possible to make a purchase plan for parts in stock and perform budget management. The inventory information may be acquired from a warehouse storage and retrieval system managed by the basic business system 7 illustrated in FIG. 6.

FIGS. 9A to 9D are diagrams illustrating an example of "Usage Condition" of the user information that the maintenance management device according to the embodiment acquires. The usage condition includes a part replacement history, an operation history, a calibration history, and the like of the field device 4. The part replacement history is stored in the part replacement history storage 33 of the user information providing device 3. The operation history is stored in the operation history storage 34. The calibration history is stored in the calibration history storage 35.

FIG. 9A illustrates a part replacement history. The part replacement history has data items of "Identifier", "Part No.", and "Date of Replacement". The data item of "Date of Replacement" is the date on which a part of a field device was replaced. For example, a field device of which "Identifier" is "zzzzz" has information on the dates of replacement for two parts of "P34567" and "P45678". For a field device in which parts are not replaced, the date of installation of the field device may be input as the data of "Date of Replacement".

By acquiring information on the part replacement history as the user information, it is possible to ascertain the next date of replacement. The part replacement history may be acquired from the CMMS 62, for example.

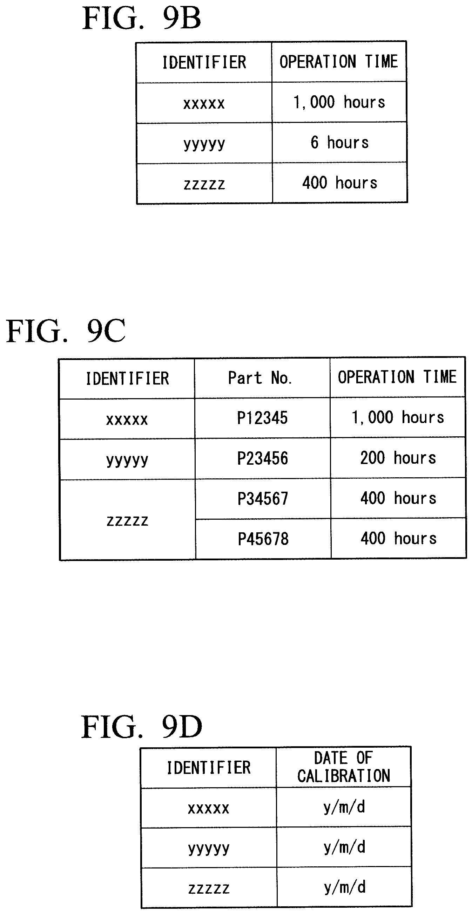

FIG. 9B illustrates an operation history of a field device. The operation history has data items of "Identifier" and "Operation Time". The "Operation Time" indicates an accumulated operation time of a field device. For example, the "Operation Time" of a field device of which "Identifier" is "zzzzz" is "400 hours".

By acquiring information on the operation history of a field device as the user information, it is possible to ascertain the next date of replacement based on the available time. The operation history may be acquired from the PIMS 61, for example.

FIG. 9C illustrates a part operation history. The part operation history has data items of "Identifier", "Part No.", and "Operation Time". The "Operation Time" indicates an accumulated operation time of a part.

By acquiring information on the operation history of a part as the user information, it is possible to ascertain the next date of replacement of a part based on the available time. The part operation history may be acquired from the PIMS 61, for example.

FIG. 9D illustrates a calibration history of a field device. The calibration history has data items of "Identifier" and "Date of Calibration". The "Date of Calibration" indicates the date on which previous calibration was performed.

By acquiring information on the calibration history of a field device as the user information, it is possible to ascertain the next date of calibration based on the recommended calibration interval. The calibration history may be acquired from the CMMS 62, for example.

Although FIGS. 9A to 9D illustrate a case in which the part replacement history, the operation history, and the calibration history of the field device 4 in accordance with acquisition destinations of the usage condition are recorded as different tables, these items of information may be recorded in the same table and be used.

Next, the recommendation information will be described with reference to FIG. 10. FIG. 10 is a diagram illustrating an example of the recommendation information that the maintenance management device according to the embodiment refers to. The recommendation information is stored in the recommendation storage 14 and is referred to by the determiner 15.

In FIG. 10, the recommendation information has data items of "Model Name", "Recommendation Condition", and "Recommendation Content". The data item of "Recommendation Condition" is a condition for notifying a user of a content set in the data item of "Recommendation Content". The determiner 15 determines whether the recommendation condition is satisfied. When it is determined that the recommendation condition is satisfied, the recommendation notifier 16 notifies of the recommendation content.

For example, a field device of which the "Model Name" is "AAA-P10" has two recommendation conditions. When "Recommendation Condition" is ["Recommended replacement interval" < ("Today" - "Date of Replacement") + "Date Margin XI"], ("Today" - "Date of Replacement") is the number of days elapsed from the previous date of replacement. The "Date Margin XI" is the number of days (variable) that can be set arbitrarily. When the recommendation condition indicates that [(the number of elapsed days) + (date margin)] is larger than the recommended replacement interval, the user is notified of a content indicating that "Recommended Replacement Interval" has been reached which is the recommendation content. That is, the user is notified of the recommendation content the date margin X1 before the recommended replacement interval. The date margin XI is increased or decreased by the recommendation condition corrector 19.

The "Recommendation Condition" that ["Failure Record Period" < ("Today" - "Date of Replacement") + "Date Margin X2"] is a condition for notifying of the elapse of the period in the recommendation content based on the "Failure Record Period" determined from the failure record of a field device of the same model. The "Failure Record Period" can be appropriated corrected by the recommendation condition corrector 19.

The recommendation condition of a field device of which "Model Name" is "BBB-F11" is ["Available time" < ("Operation Time" + "Time Margin Y")]. That is, when the operation time (+ time margin Y) exceeds the available time, a notification that the upper limit of the available time will be reached in a short period is sent. The recommendation content may be notified via a text or audio.

The recommendation condition of a field device of which "Model Name" is "CCC-F15/SS" is ["Recommended Calibration Interval" < ("Today" - "Date of Calibration") + "Date Margin Z"]. That is, when the number of days (+ date margin Z) elapsed from the previous date and time of calibration exceeds the recommended calibration interval, a notification of a recommended calibration period has been reached is sent.

The recommendation condition can be set arbitrarily and a condition which combines a recommended replacement interval and an available time may be set, for example. Moreover, a condition (exceptional condition) that the recommendation content is not notified may be set to the recommendation condition. Although FIG. 1 illustrates a case in which the recommendation information is stored in the recommendation storage 14, since it is preferable that the recommendation information is customized by a user, the recommendation information may be provided by the user information providing device 3, for example.

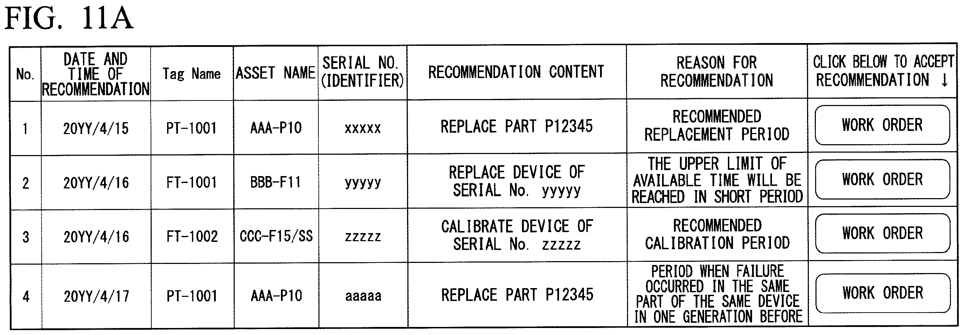

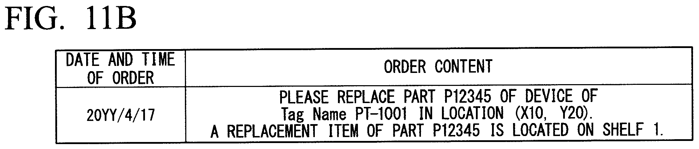

Next, display of the recommendation content will be described with reference to FIGS. 11A and 11B. FIGS. 11A and 11B are diagrams illustrating an example of recommendation display that the maintenance management device according to the embodiment notifies of. The recommendation display is a display screen displayed on a display device (not illustrated), for example, by the recommendation notifier 16.

In FIG. 11A, the recommendation display illustrates a tabular display screen. The recommendation display has display items of "No.", "Date of Recommendation", "Tag Name", "Asset Name", "Serial No. (Identifier)", "Recommendation Content", "Reason for Recommendation", and "Click to Accept Recommendation".

The display item of "Date and Time of Recommendation" is the date on which the recommendation content is displayed. The recommendation display is displayed by adding a new recommendation content corresponding thereto when it is determined that the recommendation condition described in FIG. 10 is satisfied. The recommendation display is the history of display displayed on the date and time indicated by the date and time of recommendation. The display item of "No." is incremented whenever a new recommendation content is added.

The "Asset Name" indicates the model of a field device. The recommendation content is a character string notified to a user. The "Reason for Recommendation" is the reason (a satisfied recommendation condition) why the recommendation content is displayed.

The display item of "Click to Accept Recommendation" has an operating button of "Work Order". The recommendation condition and the recommendation content are a predetermined display content determined by whether a predetermined condition calculated from the recommended replacement interval and the like is satisfied. There is a possibility that the recommendation condition and the recommendation content are not optimal to all users of the field devices. The operating button of "Work Order" is a UI for acquiring "Execution State" which is information on whether the recommendation content is to be executed actually in order to determine whether the recommendation condition and the recommendation content are suitable for the user (the user of the field device) of the maintenance management device 1. The user selects and clicks on the operating button of "Work Order" using a mouse or the like when the user accepts the recommendation content. The execution state acquirer in FIG. 1 detects an operation on the operating button of "Work Order" and determines a difference from the date and time of recommendation.

For example, the recommendation content for "No" of "1" shows that a recommendation to "Replace Part P12345" is displayed on 20YY/04/17 (yyyy/mm/dd). When the execution state acquirer 18 detects that the user has clicked on "Work Order" a little while after the recommendation display is displayed to accept the recommendation, the recommendation condition corrector 19 performs correction to decrease the value of "Date Margin XI" in FIG. 10 by determining that the timing of notifying the user of the recommendation content was too early. On the other hand, When the execution state acquirer 18 detects that the user has clicked on "Work Order" immediately after the recommendation display is displayed to accept the recommendation, the recommendation condition corrector 19 maintains (or increases) the value of "Date Margin XI" in FIG. 10 by determining that the timing of notifying the user of the recommendation content was appropriate.

FIG. 11B is a display example when the operating button of "Work Order" for "No." of "1" was operated. "Date and Time of Order" is the date and time (time is omitted) when "Work Order" was operated and indicates that the user has operated on 04/17 (mm/dd). Since the date and time of recommendation is 04/15, it means that the user has accepted the recommendation content two days after the recommendation information was displayed.

"Order Content" is a display item illustrating more detailed information of the recommendation content. FIGS. 11A and 11B illustrate a case in which information such as the place of installation (xy coordinates) of a field device, information (a tag name or a model) for specifying the field device, a work content (replacement), and the location of a part. The details of the order content may be displayed on a maintenance device that a maintenance operator carries in the field of a plant, for example. Moreover, information on a maintenance operation of a field device of the model acquired as the vendor information may be provided.

Next, a hardware configuration of the maintenance management device 1 will be described with reference to FIG. 12. FIG. 12 is a block diagram illustrating an example of a hardware configuration of a maintenance management device according to the embodiment.

In FIG. 12, the maintenance management device 1 includes a central processing unit (CPU) 101, a random access memory (RAM) 102, a read only memory (ROM) 103, a hard disk drive (HDD) 104, a display device 105, an input device 106, a communication interface (I/F) 107, a communication I/F 108, and a bus 109 that connects these elements.

The maintenance management device 1 is a server device, a general-purpose computer such as a desktop PC, an FA computer, a device such as PLC, a note or tablet-type computer, a PDA, or a smartphone, for example. The hardware of the maintenance management device 1 may be configured as a single device and may be a system made up of a combination of a plurality of devices. Moreover, the maintenance management device 1 may share hardware with other devices.

The CPU 101 executes programs stored in the RAM 102, the ROM 103, or the HDD 104 to control the maintenance management device 1. The CPU 101 executes a maintenance management program for realizing the operations of the maintenance management device 1. The maintenance management program is acquired from a recording medium that records the maintenance management program or a server or the like that provides the maintenance management program via a network. The maintenance management program is installed in the HDD 104 and is stored in the RAM 102 so that the program can be read from the CPU 101.

The display device 105 is a liquid crystal display having a displaying function, for example. The display device 105 may be realized as various forms such as a head-mounted display, an eye glasses-type display, or a wrist watch-type display. The input device 106 is a keyboard or a mouse having an input function, for example. The input device 106 may be a microphone for inputting audio information or a camera or a scanner for inputting image information. The display device 105 and the input device 106 may be realized as a device such as a touch panel having a displaying function and an input function.

The communication I/F 107 controls communication with other devices such as the manufacturing execution system 6 to be described later, the operation control device 5, the maintenance device 8, and the like via cable or wireless communication. The communication I/F 107 communication control such as transmission and reception of data, voice communication, or transmission and reception of emails with other connected devices. The communication I/F 107 performs communication control corresponding to a general-purpose communication standard such as wireless LAN communication, cable LAN communication, infrared communication, and short-range wireless communication, for example.

The communication I/F 108 controls communication with other devices such as the vendor information providing device 2 and the user information providing device 3 via cable communication or wireless communication. The communication I/F 108 performs communication control corresponding to a field communication standard such as ISA100, HART (registered trademark), BRAIN (registered trademark), FOUNDATION Fieldbus, and PROFIBUS, for example.

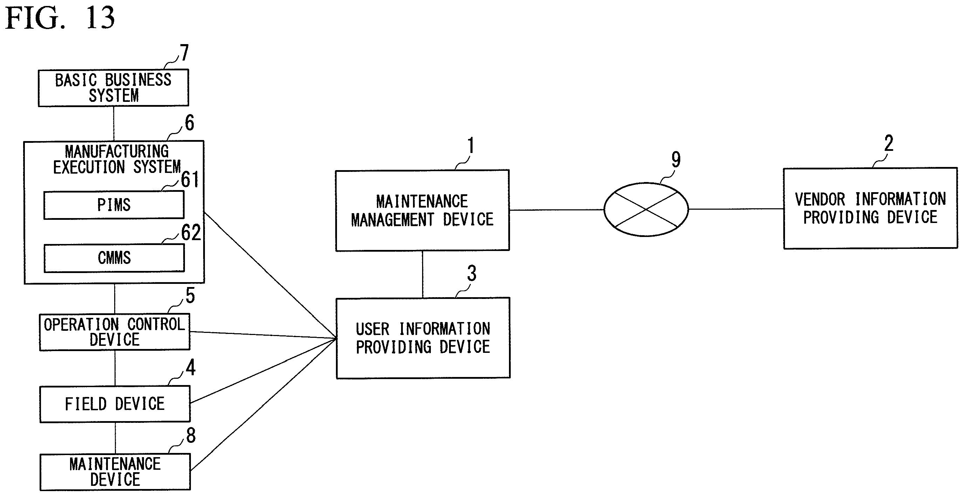

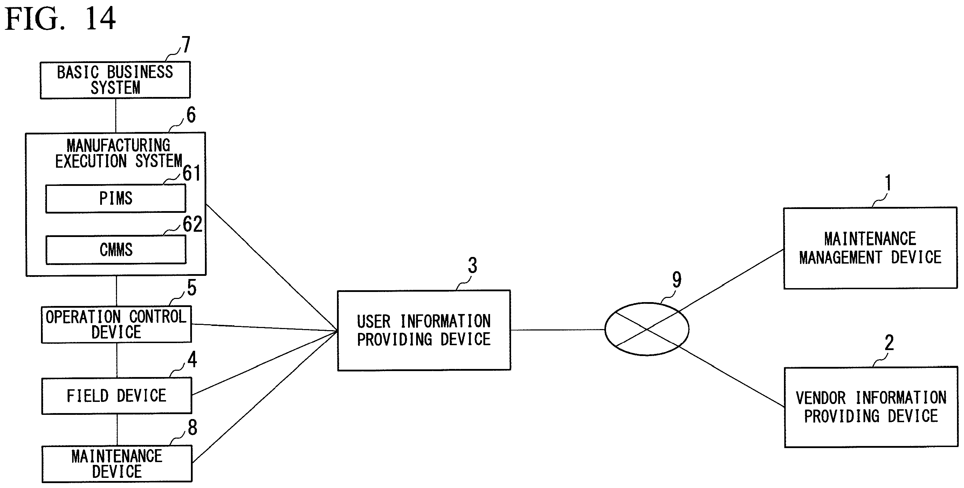

Next, a configuration of the maintenance management system will be described with reference to FIGS. 13 to 14. FIG. 13 is a block diagram illustrating an example of a configuration of a maintenance management system according to the embodiment. FIG. 14 is a block diagram illustrating another example of a configuration of a maintenance management system according to the embodiment.

FIG. 13 is a block diagram illustrating a configuration assuming a case in which the maintenance management device 1 is managed by the user of a field device. The maintenance management device 1 is disposed in respective user sites in a plant. The maintenance management device 1 is communicably connected to the user information providing device 3 in a network environment protected from the outside. On the other hand, in FIG. 13, the maintenance management device 1 is communicably connected to the vendor information providing device 2 via the network 9. The vendor information providing device 2 is shared by respective users.

In the maintenance management system illustrated in FIG. 13, since the maintenance management device 1 is disposed in a network environment protected from the outside, security of the communication between the maintenance management device 1 and the user information providing device 3 is likely to be ensured. Moreover, security of the user information that the maintenance management device 1 acquires is likely to be ensured. The functions of the maintenance management device 1 illustrated in FIG. 13 can be easily realized in the manufacturing execution system 6 similarly to the PIMS 61 or the like, for example.

FIG. 14 is a block diagram illustrating a configuration assuming a case in which the maintenance management device 1 is managed by a vendor of a field device. The maintenance management device 1 is disposed in a network environment managed by a vendor which is available from a plurality of users. The maintenance management device 1 is communicably connected to the user information providing devices 3 of a plurality of users via the network 9.

In the maintenance management system illustrated in FIG. 14, since the maintenance management device 1 is shared by a plurality of users, it is possible to eliminate the cost for the respective users installing and managing the maintenance management devices 1. The user information that the maintenance management device 1 acquires from the respective users is managed while ensuring the security of respective users. Therefore, security of communication between the user information providing device 3 and the maintenance management device 1 or the processing of the user information is ensured.

Next, the merging table stored in the merging information storage 13 illustrated in FIG. 1 will be described with reference to FIGS. 15A and 15B. FIGS. 15A and 15B are diagrams illustrating an example of a merging table including the merging information of the vendor information and the user information generated by the maintenance management device according to the present embodiment. FIG. 15A is a merging table related to parts of a field device. FIG. 15B is a merging table related to a field device body.

In FIG. 15A, the merging table has data items of "Identifier", "Part No.", "Model Name", "Tag Name", "Date of Installation", "Place of Installation", "Recommended Replacement Interval", "Date of Replacement", "Number of Stocks", "Stock Location", "Available time", and "Operation Time". FIG. 15A is a merging table that merges the acquired vendor information and the acquired user information as a table using "Identifier" and "Part No." as a search key. For example, "Model Name", "Recommended Replacement Interval", and "Available time" among the data items are based on the vendor information acquired from the vendor information providing device 2. Moreover, "Tag Name", "Date of Installation", "Place of Installation", "Date of Replacement", "Number of Stocks", "Stock Location", and "Operation Time" among the data items are based on the user information acquired from the user information providing device 3. These data items can be searched for using "Identifier" and "Part No." as a search key. By storing the merging information that merges the vendor information and the user information related to parts of a field device necessary for the maintenance operation in the merging table, users do not need to perform individual operations of obtaining the vendor information and the user information. Therefore, it is possible to improve efficiency of the maintenance operation.

In FIG. 15B, the merging table has data items of "Identifier", "Part No.", "Model Name", "Tag Name", "Date of Installation", "Place of Installation", "Recommended Replacement Interval", "Date of Replacement", "Number of Stocks", "Stock Location", "Available time", "Operation Time", "Recommended Calibration Interval", and "Date of Calibration". FIG. 15B is a merging table that merges the acquired vendor information and the acquired user information as a table using "Identifier" as a search key. For example, "Model Name", "Recommended Replacement Interval", "Available time", and "Recommended Calibration Interval" among the data items are based on the vendor information acquired from the vendor information providing device 2. Moreover, "Tag Name", "Date of Installation", "Place of Installation", "Date of Replacement", "Number of Stocks", "Stock Location", "Operation Time", and "Date of Calibration" among the data items are based on the user information acquired from the user information providing device 3. These data items can be searched for using "Identifier" as a search key. By storing the merging information that merges the vendor information and the user information related to a field device body necessary for the maintenance operation in the merging table, users do not need to perform individual operations of obtaining the vendor information and the user information. Therefore, it is possible to improve efficiency of the maintenance operation.

Next, a maintenance plan that the maintenance plan creator 17 illustrated in FIG. 1 creates will be described with reference to FIG. 16. FIG. 16 is a diagram illustrating an example of a maintenance plan that the maintenance management device according to the embodiment creates. The maintenance plan is created by the maintenance plan creator 17 and is output as display data displayed on the display device 105 or the like, for example. FIG. 16 illustrates a UI displayed on the display device 105 or the like.

In FIG. 16, a maintenance plan displayed on the display device 105 or the like illustrates a monthly budge plan for each plant. For example, Plant A is divided into Area 1 to Area 5, and a monthly budget plan summed for respective areas can be illustrated. Moreover, when a user clicks and opens (expands) a display (tab) of the respective areas using a mouse or the like, it is possible to show a monthly budget plan for each of field devices (tag names) included in each area. The illustrated values are monthly budget amounts (thousands yen: k¥) and "▲" indicates months on which maintenance is performed. By creating the maintenance plan, users can ascertain when (on which month), in which area, and how much budget is required.

As described above, a maintenance management device of the present embodiment includes a vendor information acquirer that acquires vendor information of a vendor of a device using identification information for uniquely identifying the device, a user information acquirer that acquires a usage condition of the device possessed by a user who uses the device, a recommendation storage that stores a recommendation condition set based on the vendor information and a recommendation content related to maintenance of the device in association with each other, a determiner that determines whether the recommendation condition is satisfied based on the usage condition, and a recommendation notifier that notifies of the recommendation content correlated with the recommendation condition when it is determined that the recommendation condition is satisfied. Therefore, it is possible to improve the efficiency of maintenance operations.

The maintenance management device 1 may be a device having the above-described functions and may be realized as a system which is made up of a combination of a plurality of devices and in which respective devices are communicably connected, for example. Moreover, the maintenance management device 1 may be realized as a portion of the functions of other devices.

A maintenance management method of the present embodiment includes a vendor information acquisition step of acquiring vendor information of a vendor of a device using identification information for uniquely identifying the device, a user information acquisition step of acquiring a usage condition of the device possessed by a user who uses the device, a recommendation storage step of storing a recommendation condition set based on the vendor information and a recommendation content related to maintenance of the device in association with each other, a determination step of determining whether the recommendation condition is satisfied based on the usage condition, and a recommendation notification step of notifying of the recommendation content correlated with the recommendation condition when it is determined that the recommendation condition is satisfied. Therefore, it is possible to improve the efficiency of maintenance operations.

The execution order of the steps of the maintenance management method of the present embodiment is not limited to the described order of the steps but may be executed in an arbitrary order.

Moreover, the above-described various processes of the present embodiment may be performed by recording a program for realizing the functions of the devices described in the present embodiment on a computer-readable recording medium and causing a computer system to read and execute the program recorded o the recording medium. Here, the "computer system" as used herein may include hardware such as OS and peripherals. Moreover, the "computer system" may include a homepage providing environment (or a homepage display environment) if it uses a WWW system. Moreover, the "computer-readable recording medium" is a writable nonvolatile memory such as a flexible disk, an optomagnetic disk, a ROM, or a flash memory, a portable medium such as a CD-ROM, and a storage device such as a hard disk included in a computer system.

Furthermore, the "computer-readable recording medium" is one that stores programs for a predetermined period such as a volatile memory (for example, DRAM: Dynamic Random Access Memory) provided inside a computer system that serves as a server or a client when a program is transmitted via a network such as the Internet and a communication line such as a telephone line. Moreover, the program may be transmitted from a computer system storing the program in a storage device or the like to another computer system through a transmission medium or through transmission waves in a transmission medium. Here, the "transmission medium" that transmits the program is a medium having a function of transmitting information, such as a network (communication network) such as the Internet and a communication line (communication wire) such as a telephone line. Moreover, the program may realize a part of the above-described functions. Furthermore, the program may be a so-called differential file (differential program) which can realize the above-described functions through a combination with a program that is recorded in advance in a computer system.

As used herein, the following directional terms "front, back, above, downward, right, left, vertical, horizontal, below, transverse, row and column" as well as any other similar directional terms refer to those instructions of a device equipped with the present invention. Accordingly, these terms, as utilized to describe the present invention should be interpreted relative to a device equipped with the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of the present invention.

The term "unit" is used to describe a component, unit or part of a hardware and/or software that is constructed and/or programmed to carry out the desired function. Typical examples of the hardware may include, but are not limited to, a device and a circuit.

While preferred embodiments of the present invention have been described and illustrated above, it should be understood that these are examples of the present invention and are not to be considered as limiting. Additions, omissions, substitutions, and other modifications can be made without departing from the scope of the present invention. Accordingly, the present invention is not to be considered as being limited by the foregoing description, and is only limited by the scope of the claims.

## Claims

1. A maintenance management device comprising:
a vendor information acquirer configured to acquire vendor information of a vendor of a device using identification information for uniquely identifying the device;
a user information acquirer configured to acquire a usage condition of the device possessed by a user who uses the device;
a recommendation storage that stores a recommendation condition set based on the vendor information and a recommendation content related to maintenance of the device in association with each other;
a determiner configured to determine whether the recommendation condition is satisfied or not based on the usage condition; and
a recommendation notifier configured to notify of the recommendation content associated with the recommendation condition if the determiner determines that the recommendation condition is satisfied.

2. The maintenance management device according to claim 1, further comprising:
a merging information storage that stores merging information created by merging the vendor information and the usage condition in a table,
wherein the determiner determines the recommendation condition based on the usage condition merged with the vendor information in the merging information.

3. The maintenance management device according to claim 1 or 2, further comprising:
an execution state acquirer configured to acquire an execution state of the recommendation content notified by the recommendation notifier.

4. The maintenance management device according to claim 3,
wherein the recommendation notifier is configured to notify of the recommendation content by displaying the recommendation content on a display screen, and
wherein the execution state acquirer is configured to acquire the execution state by detecting an operation to the display screen on which the recommendation content is displayed.

5. The maintenance management device according to claim 3 or 4, further comprising:
a recommendation condition corrector configured to correct the recommendation condition based on the execution state acquired by the execution state acquirer.

6. The maintenance management device according to any one of claims 1 to 5,
wherein the vendor information acquirer is configured to acquire the vendor information comprising a recommended replacement interval at which a replacement of the device is recommended,
wherein the user information acquirer is configured to acquire the usage condition related to a replacement history of the device,
wherein the determiner is configured to determine whether the recommendation condition is satisfied or not based on the recommended replacement interval and the replacement history, and
wherein the recommendation notifier is configured to notify of the recommendation content related to a replacement period of the device.

7. The maintenance management device according to claim 6,
wherein if the determiner determines that the recommendation condition representing "the recommended replacement interval < (today - date of replacement) + date margin" is satisfied, the recommendation notifier notifies of the recommendation content representing that a recommended replacement period has been reached.

8. The maintenance management device according to any one of claims 1 to 7,
wherein the vendor information acquirer is configured to acquire the vendor information comprising an available time of the device,
wherein the user information acquirer is configured to acquire the usage condition related to an operation time of the device,
wherein the determiner is configured to determine whether the recommendation condition is satisfied or not based on the available time and the operation time, and
wherein the recommendation notifier is configured to notify of the recommendation content related to the available time.

9. The maintenance management device according to claim 8,
wherein if the determiner determines that the recommendation condition representing "the available time < the operation time + time margin" is satisfied, the recommendation notifier notifies of the recommendation content representing that an upper limit of the available time will be reached in a short period.

10. The maintenance management device according to any one of claims 1 to 9,
wherein the vendor information acquirer is configured to acquire the vendor information comprising a recommended calibration interval at which a calibration of the device is recommended,
wherein the user information acquirer is configured to acquire the usage condition related to a calibration history of the device,
wherein the determiner is configured to determine whether the recommendation condition is satisfied or not based on the recommended calibration interval and the calibration history, and
wherein the recommendation notifier is configured to notify of the recommendation content related to a calibration period of the device.

11. The maintenance management device according to claim 10,
wherein if the determiner determines that the recommendation condition representing "the recommended calibration interval < (today - date of calibration) + date margin" is satisfied, the recommendation notifier notifies of the recommendation content representing that a recommended calibration period has been reached.

12. A maintenance management method comprising:
acquiring, by a vendor information acquirer, vendor information of a vendor of a device using identification information for uniquely identifying the device;
acquiring, by a user information acquirer, a usage condition of the device possessed by a user who uses the device;
storing, into a recommendation storage, a recommendation condition set based on the vendor information and a recommendation content related to maintenance of the device in association with each other;
determining, by a determiner, whether the recommendation condition is satisfied or not based on the usage condition; and
notifying, by a recommendation notifier, of the recommendation content associated with the recommendation condition if the determiner determines that the recommendation condition is satisfied.

13. The maintenance management method according to claim 12, further comprising:
storing, into a merging information storage, merging information created by merging the vendor information and the usage condition in a table; and
determining, by the determiner, the recommendation condition based on the usage condition merged with the vendor information in the merging information.

14. A maintenance management program configured for execution by a computer, the maintenance management program comprising instructions for:
acquiring vendor information of a vendor of a device using identification information for uniquely identifying the device;
acquiring a usage condition of the device possessed by a user who uses the device;
storing a recommendation condition set based on the vendor information and a recommendation content related to maintenance of the device in association with each other;
determining whether the recommendation condition is satisfied or not based on the usage condition; and
notifying of the recommendation content associated with the recommendation condition if the recommendation condition is satisfied.

15. A non-transitory computer readable storage medium storing one or more maintenance management programs configured for execution by a computer, the one or more maintenance management programs comprising instructions for:
acquiring vendor information of a vendor of a device using identification information for uniquely identifying the device;
acquiring a usage condition of the device possessed by a user who uses the device;
storing a recommendation condition set based on the vendor information and a recommendation content related to maintenance of the device in association with each other;
determining whether the recommendation condition is satisfied or not based on the usage condition; and
notifying of the recommendation content associated with the recommendation condition if the recommendation condition is satisfied.
